# EUROPÄISCHE PATENTSCHRIFT

(11) **EP 3 952 035 B1**
(45) Veröffentlichungstag und Bekanntmachung des Hinweises auf die Patenterteilung: **14.09.2022**
(21) Anmeldenummer: 21188362.4
(22) Anmeldetag: 29.07.2021
(51) Int. Cl.: H01R 43/28, H02G 1/12, H01R 9/05

(54) **VERFAHREN UND VORRICHTUNG ZUM BEARBEITEN EINES KABELENDES SOWIE ENTSPRECHEND BEARBEITETES KABEL**
METHOD AND DEVICE FOR MACHINING A CABLE END AS WELL AS CORRESPONDINGLY MACHINED CABLE
PROCÉDÉ ET DISPOSITIF D'USINAGE D'UNE EXTRÉMITÉ DE CÂBLE, AINSI QUE CÂBLE AINSI USINÉ

(30) Priorität: 05.08.2020 DE 102020120662
(43) Veröffentlichungstag der Anmeldung: 09.02.2022
(73) Patentinhaber: MD Elektronik GmbH, 84478 Waldkraiburg (DE)
(72) Erfinder: Kirchisner, Rupert, 84494 Lohkirchen (DE)

(56) Entgegenhaltungen:
- EP-A1- 3 444 911
- US-A- 4 719 697

## Beschreibung

### GEBIET DER ERFINDUNG

Die vorliegende Erfindung betrifft ein Verfahren und eine Vorrichtung zum Bearbeiten eines Endes eines Kabels, insbesondere eines geschirmten Kabels wie z.B. eines Koaxialkabels. Ferner betrifft die Erfindung ein entsprechend bearbeitetes Kabel.

### HINTERGRUND DER ERFINDUNG

Kabel werden dazu eingesetzt, um elektrische Komponenten elektrisch leitfähig miteinander zu verbinden. Dabei können Kabel dazu dienen, im Rahmen einer Signalübertragung elektrische Signale mit geringer elektrischer Leistung zu übertragen. Beispielsweise können in einem Kraftfahrzeug über Kabel Signale zwischen Komponenten wie einem Steuergerät, einem Sensor, einem Aktuator oder ähnlichem ausgetauscht werden. Alternativ können im Rahmen einer Energieversorgung hohe elektrische Leistungen über Kabel übertragen werden.

Insbesondere bei Kabeln, welche zur Übertragung hochfrequenter elektrischer Wechselspannungssignale eingesetzt werden, kann vorgesehen sein, dass ein Kabelinnenteil von einer sogenannten Schirmung umgeben wird. Die Schirmung besteht hierbei meist aus einer elektrisch leitfähigen Anordnung, welche den Kabelinnenteil mitsamt einem oder mehreren darin vorgesehenen Innenleitern umgibt und somit sowohl ein Einkoppeln von außen auftreffender hochfrequenter elektromagnetischer Felder in die Innenleiter als auch ein Auskoppeln von elektromagnetischen Feldern aufgrund von hochfrequenten Wechselströmen in den Innenleitern verhindert. Die Schirmung kann als Außenleiter des Kabels wirken. Kabel, bei denen eine Schirmung zumindest einen innenliegenden elektrischen Leiter umgibt, werden auch als geschirmte Kabel bezeichnet.

In vielen Fällen kann die Schirmung eines Kabels aus einem Drahtgeflecht bestehen. Ein solches Drahtgeflecht kann aus dünnen Drähten oder Litzen zusammengesetzt sein, welche miteinander verflochten, d.h. miteinander verschränkt oder verwoben, sind und welche sich beispielsweise entlang einer Mantelfläche des Kabels um die im Innern der Schirmung verlaufenden Innenleiter herum erstrecken.

Im Rahmen einer Konfektionierung werden Kabel für ihren Einsatzzweck angepasst. Hierbei können die Kabel in eine gewünschte Länge geschnitten werden und Enden der Kabel können geeignet bearbeitet werden. Insbesondere kann an einem Ende des Kabels eine Stützstruktur angebracht werden, um das Kabel lokal zu stützen bzw. zu versteifen. Ferner kann an einem Ende des Kabels eine Steckverbindereinheit beispielsweise mit einer oder mehreren Buchsen und/oder Steckern angebracht sein, um das Kabel mit anderen Kabeln bzw. einer elektrischen Komponente verbinden zu können. In vielen Fällen sind die Stützstruktur und die Steckverbindereinheit als gemeinsames Bauteil ausgestaltet, welches nachfolgend auch als Kabelanschlusselement bezeichnet wird.

In EP 3 444 911 A1, US4719697A, DE 10 2012 020 798 B3, DE 10 2018 112 470 A1 und DE 10 2016 113 004 A1 sind Verfahren und Vorrichtungen zum Bearbeiten von Kabelenden beschrieben.

Um einen oder mehrere Innenleiter des Kabels an einen bzw. mehrere entsprechende Anschlüsse an der Steckverbindereinheit anschließen zu können, muss der Kabelinnenteil im Allgemeinen im Bereich eines Endes des Kabels lokal freigelegt werden. Hierzu wird meist ein die Schirmung umgebender isolierender Außenmantel des Kabels lokal in einem Endbereich angrenzend an das Ende des Kabels weggeschnitten und entfernt, d.h. das Kabel wird abisoliert. Anschließend wird der Kabelinnenteil in dem Endbereich auch von der Schirmung befreit. Hierbei wird die Schirmung jedoch in den meisten Fällen nicht oder zumindest nicht vollständig weggeschnitten, da einerseits ein an dem Kabel anzubringender Stecker mechanisch mit der Schirmung verbunden werden sollte, um ausreichend hohe Abzugkräfte ("Zugentlastung") erreichen zu können und da andererseits der Stecker elektrisch mit der Schirmung verbunden werden sollte. Stattdessen kann die Schirmung umgestülpt werden, d.h. ein an eine Stirnfläche des Kabels angrenzender Bereich der Schirmung kann von der Stirnfläche des Kabels weg bewegt werden und dabei einen weiter von der Stirnfläche des Kabels entfernt befindlichen Bereich der Schirmung überlagern. Durch ein solches Umstülpen liegt das Kabelinnenteil im Endbereich des Kabels frei und die Schirmung ist angrenzend an diesen Endbereich bereichsweise gedoppelt, d.h. ein umgestülpter Bereich der Schirmung überlagert einen radial weiter innen liegenden, nicht umgestülpten Bereich der Schirmung.

Nachdem das Kabel in seinem Endbereich abisoliert und von der Schirmung befreit wurde, kann das Kabelanschlusselement an dem Kabelende angebracht werden. Hierzu wird ein hülsenartiger Bereich des Kabelanschlusselements soweit über das Kabelende geschoben, dass er den umgestülpten Bereich der Schirmung überlappt. Durch Kontakt mit der Schirmung ist dieser Bereich des Kabelanschlusselements somit mit dem Außenleiter des Kabels elektrisch verbunden. Ein oder mehrere Innenleiter des Kabels können mit entsprechenden Anschlussstrukturen des Kabelanschlusselements verbunden werden. Der hülsenartige Bereich wird auch mechanisch mit dem Kabel verbunden, beispielsweise indem beide Komponenten vercrimpt werden.

Es wurde erkannt, dass einerseits der Endbereich, in dem das Kabel abisoliert werden sollte und von dem die Schirmung weggestülpt werden sollte, je nach Anwendungsfall und Geometrie des Kabelanschlusselements eine vorgegebene Mindestlänge haben sollte. Andererseits wurde erkannt, dass eine Baulänge des Kabelanschlusselements in vielen Anwendungsfällen klein gehalten werden sollte.

### ZUSAMMENFASSUNG DER ERFINDUNG UND VORTEILHAFTER AUSFÜHRUNGSFORMEN

Es wurde somit erkannt, dass ein Bedarf an einem Verfahren und einer Vorrichtung sowie einem entsprechend ausgebildeten Kabel besteht, mithilfe derer den vorgenannten Anforderungen genügt werden kann. Insbesondere wurde erkannt, dass ein Bedarf an einem Verfahren und einer Vorrichtung bestehen kann, mithilfe derer ein Kabelende einfach, zuverlässig und/oder kostengünstig derart bearbeitet werden kann, dass an einem zu konfektionierenden Kabel ein Kabelanschlusselement mit kurzer Baulänge angebracht werden kann und dabei eine zuverlässige elektrische Kontaktierung sowohl wenigstens eines Innenleiters als auch des Außenleiters ermöglicht wird, ein Risiko elektrischer Kurzschlüsse minimiert ist und/oder eine hohe mechanische Stabilität erreicht wird.

Ein solches Bedürfnis wird durch den Gegenstand der unabhängigen Ansprüche erfüllt. Vorteilhafte Ausführungsformen sind in den abhängigen Ansprüchen sowie in der nachfolgenden Beschreibung und den beigefügten Figuren dargelegt. Gemäß einem ersten Aspekt der Erfindung wird ein Verfahren zum Bearbeiten eines Endes eines Kabels beschrieben. Das Kabel weist hierbei eine einen Kabelinnenteil umgebende Schirmung aus einem Drahtgeflecht auf. Das Verfahren umfasst zumindest folgende Verfahrensschritte: Umstülpen eines Endbereichs der Schirmung,
Schützen eines dem Ende des Kabels näheren vorderen Teils des umgestülpten Endbereichs der Schirmung gegen mechanischen Kontakt von radial außen während ein dem Ende des Kabels fernerer hinterer Teil des umgestülpten Endbereichs der Schirmung ungeschützt freiliegend verbleibt, und
Bürsten des hinteren Teils des umgestülpten Endbereichs der Schirmung in einer Umfangsrichtung tangential zu einem Umfang des Kabels.

Gemäß einem zweiten Aspekt der Erfindung wird ein Kabel beschrieben, welches einen Kabelinnenteil und eine den Kabelinnenteil umgebende Schirmung aus einem Drahtgeflecht aufweist. Ein Endbereich der Schirmung ist hierbei umgestülpt. Dabei weist ein einem Ende des Kabels näherer vorderer Teil des umgestülpten Endbereichs der Schirmung miteinander verflochtene Drähte auf und ein dem Ende des Kabels fernerer hinterer Teil des umgestülpten Endbereichs der Schirmung weist entflochtene Drähte auf, welche in Umfangsrichtung des Kabels verlaufend entlang einer Mantelfläche des Kabels angeordnet sind.

Gemäß einem dritten Aspekt der Erfindung wird eine Vorrichtung zum Bearbeiten eines Endes eines Kabels, bei welchem eine Schirmung aus einem Drahtgeflecht, einen Kabelinnenteil umgibt, beschrieben. Die Vorrichtung umfasst (i) eine Halteeinrichtung zum Halten eines Endes eines Kabels, (ii) eine Umstülpeinrichtung zum Umstülpen eines Endbereichs der Schirmung, (iii) eine Schutzeinrichtung zum temporären Schützen eines dem Ende des Kabels näheren vorderen Teils des umgestülpten Endbereichs der Schirmung gegen Kontakt von radial außen während ein dem Ende des Kabels fernerer hinterer Teil des umgestülpten Endbereichs der Schirmung ungeschützt freiliegend verbleibt, und (iv) eine Bürsteinrichtung zum Bürsten des hinteren Teils des umgestülpten Endbereichs der Schirmung in einer Umfangsrichtung tangential zu einem Umfang des Kabels.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Wie bereits weiter oben angedeutet, sollte ein Endbereich eines Kabels herkömmlicherweise über eine ausreichende Länge hin von einer Außenisolierung und einer Schirmung freigelegt werden, um einen oder mehrere dort befindliche Innenleiter freilegen und mit Anschlüssen eines Kabelanschlusselements verbinden zu können. Dabei wird meist ein ursprünglich in dem Endbereich des Kabels vorhandener Teil der Schirmung von der Stirnfläche des Endbereichs weg umgestülpt. Anschließend wird das Kabelanschlusselement an dem Ende des Kabels sowohl mechanisch als auch elektrisch angebunden. Eine Länge des Kabelanschlusselements wird dabei regelmäßig derart gewählt, dass das Kabelanschlusselement sowohl den abisolierten Endbereich des Kabels als auch den Bereich des Kabels, der von der umgestülpten Schirmung überdeckt wird, abdeckt. Dementsprechend sollte die Länge des Kabelanschlusselements herkömmlich relativ lang sein und zumindest dem Doppelten der Länge des abisolierten Endbereichs entsprechen.

Zudem wurde beobachtet, dass sich manchmal einzelne Drähte aus dem Geflecht der Schirmung am Ende der Schirmung entflechten und somit freigelegt werden können. Außerdem können eventuell beim Abisolieren durch den Abmantelprozess auch Drähte der Schirmung durchtrennt oder abgerissen werden, welche sich dann lose in dem Geflecht der Schirmung befinden und gegebenenfalls freigelegt werden können. Solche freigelegten Drähte können in ungünstigen Fällen in axialer Richtung über ein Ende des an dem Kabel angebrachten Kabelanschlusselements hinausragen. Es wird befürchtet, dass derart überstehende Drähte in ungünstigen Konstellationen zu Kurzschlüssen beispielsweise zwischen benachbarten Kabeln führen könnten. Außerdem können überstehende Drahtenden ein Verletzungsrisiko bilden, beispielsweise für Personen, welche die konfektionierten Kabel weiterverarbeiten. Ein Abschneiden oder Abreißen solcher freiliegender und überstehender Drähte könnte beispielsweise dazu führen, dass Drahtreste in eine zur Bearbeitung vorgesehene Vorrichtung gelangen und diese verschmutzen oder gar beschädigen. Eventuell könnten abgeschnittene Drahtenden auch eine zusätzliche Kurzschlussgefahr bergen.

Um insbesondere die genannten Defizite zu vermeiden, wird vorgeschlagen, das Ende eines Kabels in modifizierter Weise zu bearbeiten, bevor daran eventuell eine Außenleiterhülse oder ein mit einer Außenleiterhülse ausgestattetes Kabelanschlusselement angebracht werden.

Dabei wird zunächst ähnlich wie bei herkömmlichen Bearbeitungen von Kabelenden ein Endbereich der Schirmung umgestülpt.

Bevor jedoch die Außenleiterhülse bzw. das Kabelanschlusselement an dem Kabel angebracht werden, wird dieser umgestülpte Endbereich der Schirmung speziell bearbeitet. Hierzu wird zunächst ein vorderer Teil der umgestülpten Schirmung, d.h. derjenige Teil, der dem Ende des Kabels näher liegt, temporär geschützt, sodass er nicht mehr von radial außen kontaktiert werden kann. Beispielsweise kann hierzu der vordere Teil der umgestülpten Schirmung von einem schützenden Gegenstand wie einer Hülse temporär überdeckt werden. Hierbei wird darauf geachtet, dass ein hinterer Teil des umgestülpten Endbereichs der Schirmung ungeschützt bleibt und somit frei liegt.

Anschließend wird der freiliegende hintere Teil des umgestülpten Endbereichs der Schirmung gezielt in einer Querrichtung, welche tangential zum Umfang des Kabels gerichtet ist, gebürstet. Durch ein solches in Umfangsrichtung gerichtetes Bürsten können etwaig vorhandene entflochtene Drähte aus einer anfänglichen Konfiguration, in der diese Drähte näherungsweise parallel zur Längserstreckung des Kabels gerichtet sind, in eine Konfiguration gebürstet werden, in der sie quer zur Längserstreckungsrichtung des Kabels liegen. Beim vorangehenden Abmanteln durchtrennte oder abgerissene Drähte der Schirmung können aus der Schirmung herausgebürstet oder in der Bürstrichtung umgebogen werden. Borsten einer zum Bürsten eingesetzten Bürste können hierbei die Drähte der Schirmung erfassen und in einer Bürstrichtung mitnehmen bzw. umbiegen. Dementsprechend kann vermieden werden, dass solche Drähte anschließend, nachdem die Außenleiterhülse bzw. das Kabelanschlusselement angebracht wurden, axial über ein solches Element hinausragen und beispielsweise Kurzschlüsse verursachen könnten.

Ein verfahrensgemäß herzustellendes Kabel gemäß einer Ausführungsform des zweiten Aspekts der Erfindung weist somit eine Schirmung auf, welche ein Kabelinnenteil umgibt und bei der ein Endbereich umgestülpt ist. Der vordere Teil der umgestülpten Schirmung war dabei beim Bearbeiten des Endes des Kabels insbesondere während des Bürstens gegen Kontakt von außen geschützt, sodass ein die Schirmung bildendes Geflecht weiterhin miteinander verflochtene Drähte aufweist. Der hintere Teil der umgestülpten Schirmung blieb jedoch ungeschützt, sodass dort Drähte der Schirmung beim Bürsten mitgenommen und in Umfangsrichtung des Kabels verlaufend entlang der Mantelfläche des Kabels angeordnet wurden.

Insgesamt kann somit bei einem solchen Kabel einerseits vermieden werden, dass aus der Schirmung gelöste Drähte in Längsrichtung über ein Ende der Schirmung hinausragen und somit letztendlich über eine die Schirmung umgebende Außenleiterhülse überstehen. Andererseits benötigt der umgebürstete hintere Teil der Schirmung weniger Platz in Längsrichtung des Kabels, als dies bei einer ungebürsteten Schirmung der Fall wäre, sodass insgesamt eine Außenleiterhülse bzw. ein Kabelanschlusselement in Axialrichtung kürzer sein kann als bei herkömmlich bearbeiteten Kabeln.

Eine zum Durchführen des vorgestellten Verfahrens einsetzbare Vorrichtung gemäß einer Ausführungsform des dritten Aspekts der Erfindung weist zumindest eine Halteeinrichtung auf, mithilfe derer das Ende des Kabels gehalten werden kann, sowie eine Umstülpeinrichtung, mit der der Endbereich der Schirmung umgestülpt werden kann. Ergänzend weist die Vorrichtung eine Schutzeinrichtung sowie eine Bürsteinrichtung auf. Die Schutzeinrichtung ist dazu ausgestaltet, insbesondere während eines Bürstvorgangs den vorderen Teil des umgestülpten Endbereichs der Schirmung gegen Kontakt von radial außen, das heißt, insbesondere gegen einen Kontakt durch Borsten der Bürsteinrichtung zu schützen. Dabei ist die Schutzeinrichtung derart ausgestaltet und positioniert, dass der hintere Teil des umgestülpten Endbereichs der Schirmung während des Bürstvorgangs ungeschützt freiliegt, sodass dort Borsten der Bürsteinrichtung die Drähte der Schirmung mitreißen können. Die Bürsteinrichtung ist hierzu derart ausgestaltet, dass der hintere Teil der umgestülpten Schirmung in Umfangsrichtung tangential zu dem Umfang des Kabels gebürstet werden kann.

Gemäß einer Ausführungsform wird bei dem Verfahren der hintere Teil des umgestülpten Endbereichs der Schirmung vorzugsweise derart gebürstet, dass Drähte aus dem Drahtgeflecht der Schirmung zumindest bereichsweise entflochten und in Umfangsrichtung des Kabels verlaufend entlang einer Mantelfläche des Kabels angeordnet werden.

Mit anderen Worten kann der hintere Teil der umgestülpten Schirmung gezielt derart gebürstet werden, dass darin zunächst verflochten angeordnete Drähte aus dem Drahtgeflecht herausgelöst werden und somit das Drahtgeflecht bereichsweise entflochten wird. Die dann einzeln freiliegenden Drähte der ursprünglichen Schirmung können dabei durch geeignetes Bürsten derart gebogen bzw. verlagert werden, dass sie nicht mehr axial oder schräg zu einer Längserstreckungsrichtung an der Mantelfläche des Kabels anliegen, sondern quer bzw. im Wesentlichen rechtwinklig zu dieser Längserstreckungsrichtung, d.h. in einer Umfangsrichtung des Kabels verlaufen und somit um den Außenumfang des Kabels herumgewickelt sind. Die Drähte in dem hinteren, während des Bürstens ungeschützt verbleibenden Teils der umgestülpten Schirmung können somit gezielt entflochten und dann platzsparend in Umfangsrichtung um das Kabel gewickelt werden. Hierzu können sich Borsten der Bürsteinrichtung in tangentialer Richtung entlang des hinteren Teils der umgestülpten Schirmung bewegen und dabei dortige Drähte der Schirmung gegebenenfalls zuerst entflechten und dann in der Umfangsrichtung mitreißen und ausrichten.

Gemäß einer Ausführungsform können hierbei eine zum Bürsten eingesetzte Bürste und das Kabelende relativ zueinander derart bewegt werden, dass die Bürste entlang einer Umfangsrichtung des Kabels um das Kabelende herumgeführt wird.

Anders ausgedrückt kann zum Zwecke des Bürstens das Kabel relativ zu zumindest einer Bürste derart bewegt werden, dass sich Borsten der Bürste in der Umfangsrichtung zumindest bereichsweise entlang der Mantelfläche des Kabels bewegen und dabei dort verlaufende Drähte der Schirmung mitnehmen und ausrichten. Hierzu kann das Kabel um eine Achse parallel zu seiner Längserstreckungsachse rotiert werden. Alternativ oder ergänzend kann die Bürste in Umfangsrichtung um das Kabel herum bewegt werden, d.h., die Bürste kann um das Kabel, das typischerweise eine im Wesentlichen zylindrische Form aufweist, auf einer Kreisbahn oder einer Kreisspiralbahn bewegt werden. Als weitere Alternative oder Ergänzung können mehrere Bürsten um das Kabel herum angeordnet sein. Borsten der mehreren Bürsten können den hinteren Teil der umgestülpten Schirmung dabei an mehreren verschiedenen Positionen entlang des Umfangs des Kabels kontaktieren. Die Bürsten können hierbei gleichsinnig um Achsen parallel zur Längserstreckungsachse des Kabels rotieren.

Die Vorrichtung gemäß dem dritten Aspekt der Erfindung kann dementsprechend eine Antriebseinrichtung aufweisen, welche dazu konfiguriert ist, das von der Halteeinrichtung gehaltene Kabel und zumindest eine in der Bürsteinrichtung vorgesehene Bürste derart relativ zueinander zu bewegen, dass der hintere Teil des umgestülpten Endbereichs der Schirmung von der Bürste derart gebürstet wird, dass Drähte aus dem Drahtgeflecht der Schirmung zumindest bereichsweise entflochten und in Umfangsrichtung des Kabels verlaufend entlang einer Mantelfläche des Kabels angeordnet werden. Die Antriebseinrichtung kann hierbei das Kabel und/oder die Bürste derart relativ zueinander bewegen, dass die Bürste tangential zum Umfang des Kabels oder umlaufend um den Umfang des Kabels verlagert wird. Gegebenenfalls kann dabei die Bürste um eine Rotationsachse rotiert werden.

Gemäß einer Ausführungsform kann der vordere Teil des umgestülpten Endbereichs der Schirmung insbesondere während des Bürstens mithilfe einer Schutzhülse geschützt werden, welche derart ausgestaltet ist und positioniert wird, dass die Schutzhülse einen Außenumfang des vorderen Teils des umgestülpten Endbereichs der Schirmung überdeckt und den hinteren Teil des umgestülpten Endbereichs der Schirmung nicht überdeckt.

Mit anderen Worten kann der vordere Teil der umgestülpten Schirmung vor einem Kontakt mit den Borsten einer Bürste geschützt werden, indem dieser vordere Teil von einer Schutzhülse umgeben wird. Die Schutzhülse kann beispielsweise zylindrisch ausgebildet sein. Die Schutzhülse kann einen Innendurchmesser aufweisen, der zumindest geringfügig größer ist als ein Außendurchmesser des Kabels einschließlich der umgestülpten Schirmung. Dementsprechend kann die Schutzhülse vor dem Bürsten einfach und reibungsarm in axialer Richtung des Kabels über den zu schützenden vorderen Teil der umgestülpten Schirmung geschoben werden. Dabei sollte die Schutzhülse lediglich eine derartige Länge aufweisen bzw. derart positioniert werden, dass sie den hinteren Teil der umgestülpten Schirmung nicht überdeckt. Nachdem der hintere Teil der Schirmung in Umfangsrichtung gebürsteten wurde, kann die Schutzhülse wieder entfernt werden, beispielsweise indem sie entgegen der axialen Richtung des Kabels abgezogen wird.

Die Schutzhülse kann aus einem mechanisch widerstandsfähigen Material bestehen oder an einer Außenoberfläche beschichtet sein, sodass sie den über Sie reibenden Borsten der Bürste weitgehend schädigungsfrei widerstehen kann. Dementsprechend kann die Schutzhülse einer Vielzahl von Bürstvorgängen widerstehen und somit während einer Vielzahl von Bearbeitungsvorgängen von Kabelenden wiederverwendet bzw. eingesetzt werden. Beispielsweise kann die Schutzhülse aus Metall, insbesondere Stahl, bestehen. Eventuell kann die Schutzhülse aus einem gehärteten Material, insbesondere gehärtetem Metall bestehen. Alternativ kann die Schutzhülse jedoch auch aus einem Kunststoff bestehen.

Die Vorrichtung gemäß dem dritten Aspekt der Erfindung kann hierzu eine Verschiebeeinrichtung aufweisen, welche dazu konfiguriert ist, das von der Halteeinrichtung gehaltene Kabel und eine in der Schutzeinrichtung vorgesehene Schutzhülse derart relativ zueinander zu bewegen, dass die Schutzhülse temporär einen Außenumfang des vorderen Teils des umgestülpten Endbereichs der Schirmung überdeckt und den hinteren Teil des umgestülpten Endbereichs der Schirmung nicht überdeckt. Die Verschiebeeinrichtung kann einen Aktor wie beispielsweise einen Elektromotor aufweisen. Der Aktor kann fest und/oder starr mit der Schutzhülse gekoppelt sein. Ferner kann eine Steuerung und/oder eine Leistungsversorgung vorgesehen sein. Die Verschiebeeinrichtung kann dazu ausgelegt sein, das Ende des Kabels und die Schutzhülse linear, insbesondere in einer Richtung parallel zu der Längsrichtung des Kabels, relativ zueinander zu verlagern.

Gemäß einer konkretisierten Ausführungsform kann die Schutzhülse an zumindest einer Stirnseite eine trichterartige Aufweitung aufweisen.

Anders ausgedrückt kann die Schutzhülse länglich sein und über einen überwiegenden Anteil ihrer Länge hin einen gleich bleibenden Querschnitt aufweisen. Dieser Querschnitt kann derart ausgestaltet sein, dass eine Innenkontur der Schutzhülse geringfügig größer ist als eine Außenkontur des zu schützenden vorderen Teils der umgestülpten Schirmung. An einer Stirnseite kann die Schutzhülse hierbei trichterartig aufgeweitet sein, d.h. hinsichtlich ihrer Innenkontur sukzessive vergrößert sein. Aufgrund einer solchen trichterartigen Aufweitung kann die Schutzhülse besonders einfach über das Kabel und die zu schützende Schirmung bewegt werden und ein Risiko, die Schirmung beim Aufschieben der Schutzhülse zu beschädigen, kann minimiert werden.

Gemäß einer Ausführungsform umfasst das vorgeschlagene Verfahren ergänzend ein Anbringen einer Außenleiterhülse an dem Ende des Kabels derart, dass die Außenleiterhülse sowohl den vorderen Teil als auch den in Umfangsrichtung gebürsteten hinteren Teil des umgestülpten Endbereichs der Schirmung überdeckt.

Die Außenleiterhülse kann somit einen Bereich des Kabels angrenzend an dessen Stirnende stützen, d.h. insbesondere gegen ein Biegen versteifen. Außerdem kann die Außenleiterhülse dazu dienen, eine elektrische Anbindung des von der Schirmung gebildeten Außenleiters des Kabels an einen entsprechenden Anschluss eines Kabelanschlusselements zu bilden. Dabei überdeckt die Außenleiterhülse sowohl den vorderen als auch den hinteren Teil der umgestülpten Schirmung, sodass die umgestülpte Schirmung in beiden Teilen gegen Beschädigungen durch einen mechanischen Kontakt von radial außen her geschützt ist. Die Außenleiterhülse kann hierbei an dem Ende des Kabels formschlüssig, kraftschlüssig und/oder stoffschlüssig befestigt werden. Insbesondere kann die Außenleiterhülse mit dem Kabel vercrimpt werden. Die Außenleiterhülse kann integraler Bestandteil eines Kabelanschlusselements wie eines Steckers oder einer Buchse sein oder mit diesem mechanisch verbunden sein.

Gemäß einer konkretisierten Ausführungsform kann die Außenleiterhülse an dem Ende des Kabels insbesondere angrenzend an den vorderen Teil des umgestülpten Endbereichs der Schirmung befestigt werden.

Anders ausgedrückt kann die Außenleiterhülse den gesamten umgestülpten Endbereich der Schirmung überdecken und dabei zumindest an dessen vorderem Teil befestigt sein. Beispielsweise kann die Außenleiterhülse mit dem Kabel im Bereich des vorderen Teils der umgestülpten Schirmung vercrimpt sein. Da in diesem vorderen Teil das die Schirmung bildende Geflecht intakt ist, d.h. die die Schirmung bildenden Drähte einander kreuzend miteinander verflochten sind, kann die Außenleiterhülse besonders effektiv und auf Zug belastbar mit dem Kabel und insbesondere mit dem umgestülpten Geflecht der Schirmung verbunden, insbesondere vercrimpt, werden. Abzugkräfte, mit denen die Außenleiterhülse bzw. ein Kabelanschlusselement auf Zug belastet werden können, ohne sich von dem Kabel zu lösen, können somit hoch sein.

Gemäß einer Ausführungsform kann der vordere Teil des umgestülpten Endbereichs der Schirmung in Längsrichtung des Kabels länger sein als der hintere Teil des umgestülpten Endbereichs der Schirmung.

Mit anderen Worten kann der gesamte umgestülpte Endbereich der Schirmung in einen längeren vorderen Teil und einen kürzeren hinteren Teil unterteilt angesehen werden. Der vordere Teil erstreckt sich dabei über mehr als 50 %, vorzugsweise mehr als 60 % oder sogar mehr als 70 % der Gesamtlänge des umgestülpten Endbereichs, bezogen auf einen Zustand direkt nach dem Umstülpen des Endbereichs, d.h. bevor der hintere Teil des Endbereichs in Umfangsrichtung gebürstet und somit eventuell verkürzt wird.

Indem der größere Anteil der umgestülpten Schirmung als vorderer Teil des Endbereichs während des Bürstens geschützt wird und somit als intaktes Geflecht bestehen bleibt, kann das Kabel in dem Bereich dieses intakten Geflechts effektiv und auf Zug belastbar mit der Außenleiterhülse verbunden, insbesondere vercrimpt, werden.

Eine Ausführungsform des Kabels gemäß dem zweiten Aspekt der Erfindung weist somit eine Außenleiterhülse auf, welche sowohl den vorderen Teil als auch den hinteren Teil des umgestülpten Endbereichs der Schirmung überdeckt und welche zumindest im Bereich des vorderen Teils des umgestülpten Endbereichs der Schirmung an dem Kabel befestigt ist.

Eine Ausführungsform der Vorrichtung gemäß dem dritten Aspekt der Erfindung kann hierzu eine Befestigungseinrichtung aufweisen, welche zum Befestigen einer Außenleiterhülse an dem Ende des Kabels derart, dass die Außenleiterhülse sowohl den vorderen Teil als auch den in Umfangsrichtung gebürsteten hinteren Teil des umgestülpten Endbereichs der Schirmung überdeckt, konfiguriert ist. Die Befestigungseinrichtung kann hierbei die Außenleiterhülse beispielsweise in axialer Richtung über das Ende des Kabels bewegen, bis diese den gesamten umgestülpten Endbereich der Schirmung überlagert. Anschließend kann die Befestigungseinrichtung die Außenleiterhülse mit dem Kabel mechanisch koppeln, d.h. beispielsweise mithilfe einer Crimpeinrichtung vercrimpen.

Es wird darauf hingewiesen, dass mögliche Merkmale und Vorteile von Ausführungsformen der Erfindung hierin teilweise mit Bezug auf ein erfindungsgemäß ausgestaltetes Bearbeitungsverfahren und teilweise mit Bezug auf ein erfindungsgemäßes, geeignet bearbeitetes Kabel oder eine zur Durchführung des Verfahrens konfigurierte Vorrichtung beschrieben sind. Ein Fachmann wird erkennen, dass die für einzelne Ausführungsformen beschriebenen Merkmale in analoger Weise geeignet auf andere Ausführungsformen übertragen werden können, angepasst werden können und/oder ausgetauscht werden können, um zu weiteren Ausführungsformen der Erfindung und möglicherweise Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Fig. 1 zeigt eine Querschnittsansicht durch ein gemäß einer Ausführungsform der vorliegenden Erfindung zu bearbeitendes Kabel.
Fig. 2 (a) - (g) zeigt eine Sequenz von Schritten eines Bearbeitungsverfahrens gemäß einer weiteren Ausführungsform der vorliegenden Erfindung.
Fig. 3 (a) - (c) veranschaulicht Möglichkeiten zum Bürsten einer Schirmung im Rahmen eines Verfahrens gemäß einer Ausführungsform der vorliegenden Erfindung.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

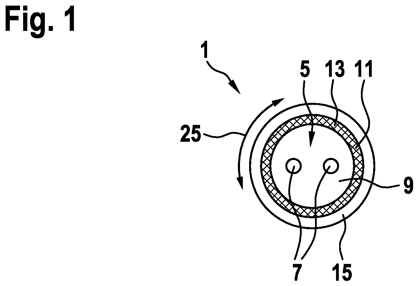

Fig. 1 zeigt eine Querschnittsansicht durch ein Kabel 1 in Form eines Koaxialkabels. Das Kabel 1 weist einen Kabelinnenteil 5 auf, in dem im dargestellten Beispiel zwei Innenleiter 7 in Form von zueinander parallel verlaufenden Drähten bzw. Litzen aufgenommen sind. Die Innenleiter 7 sind von einer Zwischenisolation 9 umgeben und somit sowohl voneinander als auch nach außen hin elektrisch isoliert. Der Kabelinnenteil 5 wird von einer Schirmung 11 umgeben, die aus einem Drahtgeflecht 13 gebildet ist. Außen um die Schirmung 11 verläuft eine Außenisolation 15.

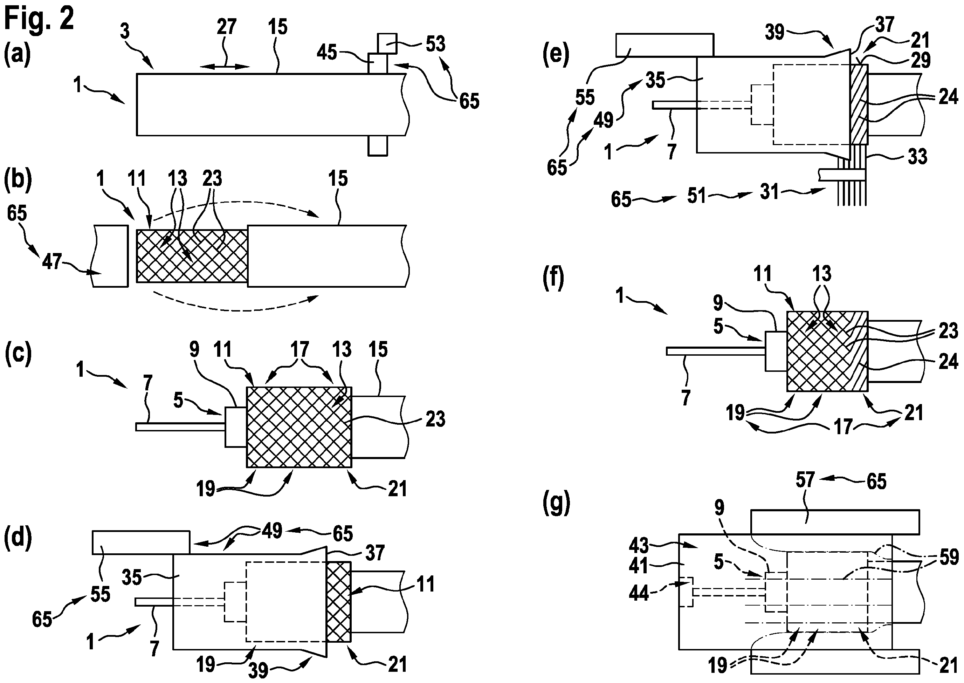

In den Fign. 2(a) bis (g) wird eine Sequenz eines Verfahrens veranschaulicht, bei dem ein Ende 3 des Kabels 1 bearbeitet wird, um daran letztendlich ein Kabelanschlusselement 43 mit einer Außenleiterhülse 41 sowohl elektrisch kontaktierend als auch mechanisch befestigt anzubringen.

Zu Beginn des Verfahrens wird, wie in Fig. 2 (a) dargestellt, das Ende 3 des Kabels 1 mithilfe einer Halteeinrichtung 45 gehalten. Die Halteeinrichtung 45 kann das Kabel 1 beispielsweise von wenigstens zwei Seiten her greifen bzw. beklemmen und somit kraftschlüssig halten. Gegebenenfalls kann an der Halteeinrichtung 45 eine Antriebseinrichtung 53 vorgesehen sein, mithilfe derer die Halterichtung 45 bzw. das gehaltene Kabel 1 bewegt werden kann. Beispielsweise kann mithilfe der Antriebseinrichtung 53 das Kabel 1 in seiner Längsrichtung 27 und/oder in einer quer zu dieser Längsrichtung 27 verlaufenden Richtung verlagert und/oder in einer Umfangsrichtung 25 (siehe Fig. 1) rotiert werden. Die Halteeinrichtung 45 und gegebenenfalls die Antriebseinrichtung 53 können das Kabel 1 während des gesamten Verfahrens halten und gegebenenfalls bewegen, sind aber aus Gründen der Übersichtlichkeit lediglich in Fig. 1 (a) dargestellt.

In einem ersten Schritt wird dann, wie in Fig. 2 (b) dargestellt, zunächst beispielsweise über eine Länge von typischerweise einigen Millimetern hin, beispielsweise zwischen 5 mm und 30 mm, vorzugsweise zwischen 7 mm und 15 mm, die Außenisolation 15 des Kabels 1 entfernt, das heißt das Kabel 1 wird durch Abmanteln abisoliert. Hierzu kann eine zum Bearbeiten des Kabels 1 vorgesehene Vorrichtung eine Schnitteinrichtung aufweisen (nicht dargestellt), mithilfe derer die Außenisolation in 15 ringförmig durchtrennt wird, sodass sie dann in Längsrichtung 27 von dem Ende 3 des Kabels 1 abgezogen werden kann. Hierdurch wird das Drahtgeflecht 13 der Schirmung 1 in einem Endbereich freigelegt.

Anschließend wird die Schirmung 11 von einem Stirnende des Kabels 1 weg nach hinten umgestülpt, wie dies mit den gestrichelten Linien in Fig. 2 (b) angedeutet ist. Hierzu kann eine Umstülpeinrichtung 47 beispielsweise das Drahtgeflecht 13 der Schirmung 11 zunächst im Bereich der Stirnfläche des Kabels 1 aufweiten, beispielsweise mithilfe eines gezielt gerichteten Luftstoßes. Anschließend kann die Umstülpeinrichtung 47 den zuvor freigelegten Endbereich der Schirmung 11 beispielsweise mithilfe einer zylindrischen Hülse untergreifen und nach hinten über die dort noch befindliche Außenisolation 15 schieben und somit umstülpen.

Wie in Fig. 2 (c) zu erkennen, überlagert somit der umgestülpte Endbereich 17 der Schirmung 11 einen endnahen Teil der Außenisolation 15. Dabei kann der umgestülpte Endbereich 17 der Schirmung 11 in einen dem Ende 3 des Kabels 1 näheren vorderen Teil 19 und einen ferneren hinteren Teil 21 untergliedert angesehen werden.

Ergänzend kann die Zwischenisolation 9 zumindest über eine gewisse Länge angrenzend an das Stirnende des Kabels 1 entfernt und somit die Innenleiter 7 freigelegt werden. Eine hierzu eingesetzte Vorrichtung kann eine geeignete Schnitteinrichtung und/oder eine geeignete Abzugseinrichtung aufweisen (nicht dargestellt).

In dem in Fig. 2 (c) dargestellten Zustand wird herkömmlich dann meist eine Außenleiterhülse eines Kabelanschlusselements über den umgestülpten Endbereichs 17 der Schirmung 11 geschoben und mit dem Kabel 1 vercrimpt. Dabei sollte die Außenleiterhülse ausreichend lang sein, um den gesamten Endbereich 17 zu überdecken. Es wurde jedoch beobachtet, dass sich einzelne Drähte 23 des Drahtgeflechts 13 der Schirmung 11 aus dem Drahtgeflecht 13 lösen können und sich in Längsrichtung 27 über eine solche Außenleiterhülse hinaus erstrecken können und dann unter der Außenleiterhülse hervorragen können.

Um dies zu vermeiden, wird, wie in Fig. 2 (d) veranschaulicht, der vordere Teil 19 des umgestülpten Endbereichs 17 der Schirmung 11 mithilfe einer Schutzeinrichtung 49 zeitweise gegen mechanischen Kontakt von radial außen geschützt, wobei jedoch der hintere Teil 21 des umgestülpten Endbereichs 17 der Schirmung 11 freiliegend und somit ungeschützt verbleibt.

Hierzu kann eine Schutzhülse 35 eingesetzt werden, die den vorderen Teil 19 überdeckt und den hinteren Teil 21 freilässt. Die beispielsweise zylindrische Schutzhülse 35 kann einen größeren Innendurchmesser aufweisen als der Außendurchmesser des Kabels 1 einschließlich der umgestülpten Schirmung 11. Die Schutzhülse 35 kann Teil der Schutzeinrichtung 49 sein. Die Schutzeinrichtung 49 kann ferner über eine Verschiebeeinrichtung 55 verfügen, mithilfe derer die Schutzhülse 35 und das Kabel 1 relativ zueinander bewegt, insbesondere parallel zu der Längsrichtung 27 relativ zueinander verschoben, werden können. Dementsprechend kann die Schutzeinrichtung 49 die Schutzhülse 35 temporär von der Stirnseite des Kabels 1 kommend soweit über das Ende 3 des Kabels 1 schieben, bis die Schutzhülse 35 den vorderen Teil 19 der umgestülpten Schirmung 11 überdeckt, aber den hinteren Teil 21 freilässt.

Um das Einschieben des Kabels 1 in die Schutzhülse 35 zu vereinfachen, kann diese insbesondere im Bereich ihrer in Einschubrichtung vorderen Stirnseite 37 eine trichterartige Aufweitung 39 aufweisen.

Nachdem der vordere Teil 19 der umgestülpten Schirmung 11 auf diese Weise geschützt wurde, kann in einem in Fig. 2 (e) veranschaulichten Verfahrensschritt der hintere Teil 21 des umgestülpten Endbereichs 17 der Schirmung 11 gezielt in der Umfangsrichtung 25 tangential zu einem Umfang des Kabels 1 gebürstet werden.

Hierzu kann eine Bürsteinrichtung 51 über wenigstens eine Bürste 31 verfügen. Die Bürste 31 kann derart positioniert und relativ zu dem Kabel 1 bewegt werden, dass Borsten 33 der Bürste 31 den ungeschützten hinteren Teil 21 der umgestülpten Schirmung 1 kontaktieren. Dabei können die Borsten 33 eventuell vorhandene entflochtene Drähte 23 des Drahtgeflechts 13 mitnehmen und in die Umfangsrichtung 25 ziehen. Hierdurch kann verhindert werden, dass solche freiliegenden Drähte 23 in Längsrichtung 27 nach hinten über die umgestülpte Schirmung 11 hinausragen.

Eventuell kann der freiliegende hintere Teil 21 der umgestülpten Schirmung 11 sogar derart gebürstet werden, dass Drähte 23 aufgrund des Bürstens gezielt aus dem Drahtgeflecht 13 entflochten werden und dabei bzw. anschließend in die Umfangsrichtung 25 umorientiert werden. Die umgebürsteten Drähte 23 verlaufen dabei entlang einer Mantelfläche 29 des Kabels 1.

Als ergänzende Maßnahme (in Fig. 2(e) nicht veranschaulicht) kann der hintere Teil 21 der umgestülpten Schirmung 11 vor dem Bürsten noch gezielt in Richtung des Stirnendes des Kabels 1, d.h. hin zu der Schutzhülse 35, geschoben werden. Hierzu kann beispielsweise ein geeignet ausgeschnittenes Blech von der Seite her, d.h. in radialer Richtung, an die Außenseite des Kabels 1 an einer Position hinter der umgestülpten Schirmung 11 angelagert werden und dann in Längsrichtung 27 nach vorne, das heißt in einer Richtung hin zu dem Stirnende des Kabels 1, geschoben werden, um dabei den über die Schutzhülse 35 überstehenden hinteren Teil 21 der umgestülpten Schirmung 11 hin zu der Schutzhülse 35 pressen. Hierdurch kann das Drahtgeflecht 13 im hinteren Teil 21 der Schirmung 11 komprimiert und eventuell bereichsweise aufgestellt werden, sodass es anschließend einfacher bzw. effizienter gebürstet werden kann.

Durch das Umbürsten des hinteren Teils 21 kann eine Länge des hinteren Teils 21 der umgestülpten Schirmung 11 deutlich verkürzt werden. Wie in Fig. 2 (f) dargestellt, kann somit die gesamte axiale Länge des umgestülpten Bereichs 17 der Schirmung 11 deutlich kürzer sein, als dies vor dem Umbürsten (siehe Fig. 2(c)) der Fall war. Außerdem kann durch das Umbürsten erreicht werden, dass die gebürsteten Drähte 24 der Schirmung 11 im hinteren Bereich 21 alle in etwa gleich und entlang der Umfangsrichtung 25 des Kabels 1 orientiert sind.

Abschließend wird, wie in Fig. 2 (g) veranschaulicht, eine Außenleiterhülse 41, die im dargestellten Beispiel Teil eines Kabelanschlusselements 43 ist, an dem Ende 3 des Kabels 1 angebracht. Die Außenleiterhülse 41 wird hierzu mithilfe einer Befestigungseinrichtung 57 derart über das Ende 3 des Kabels 1 geschoben, dass sie den gesamten umgestülpten Bereich 17 der Schirmung 11 überdeckt. Die Innenleiter 7 können dabei jeweils mit einem zugehörigen Innenleiteranschluss 44 des Kabelanschlusselements 43 verbunden werden. Die Außenleiterhülse 41 kann dann an dem Kabel 1 befestigt werden, indem sie insbesondere in einem Bereich, in dem die Außenleiterhülse 41 an den vorderen Teil 19 des umgestülpten Endbereichs 17 der Schirmung 11 angrenzt, bereichsweise in radialer Richtung zusammengequetscht wird. Hierdurch kann eine Vercrimpung 59 (in Fig. 2 (g) strichpunktiert angedeutet) erzeugt werden, aufgrund derer die Außenleiterhülse 41 das Kabel 1 beklemmt und dabei insbesondere in das noch intakte Drahtgeflecht 13 der umgestülpten Schirmung 11 in deren vorderem Teil 19 eingreifen. Die Vercrimpung 59 kann dabei an den verflochtenen Drähten des Drahtgeflechts 13 halten, sodass die derart vercrimpte Außenleiterhülse 41 hohen, in der Längsrichtung 27 wirkenden Abzugkräften standhalten kann.

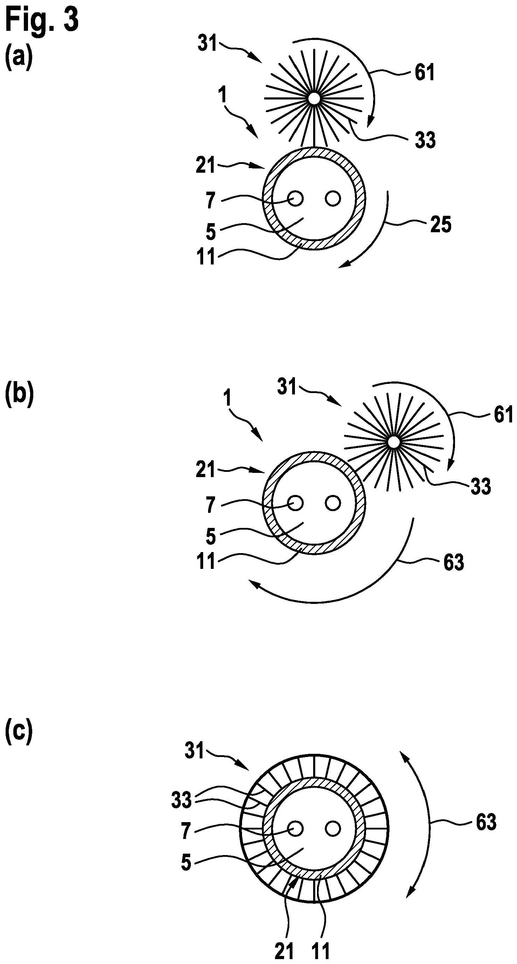

Nachfolgend werden mit Bezug auf die Fig. 3 (a) bis (c) Möglichkeiten erläutert, wie das Bürsten des hinteren Teils 21 der umgestülpten Schirmung 11 unter Zuhilfenahme geeigneter Bürsten 31 umgesetzt werden kann. Die Figuren sind hierbei sehr schematisch gehalten und sollen lediglich ein Wirkprinzip veranschaulichen.

Fig. 3 (a) veranschaulicht eine Ausgestaltung, bei der eine Bürste 31 ortsfest relativ zu dem Kabel 1 gehalten ist. Die Bürste 31 kann eine Rundbürste sein und in einer Bürstenrotationsrichtung 61, das heißt um eine parallel zu der Längsrichtung 27 des Kabels 1 gerichtete Rotationsachse, rotieren. Das Kabel 1 kann in diesem Fall in Umfangsrichtung 25, d.h. um seine Längsrichtung 27 herum, rotiert werden. Hierzu kann beispielsweise die Antriebseinrichtung 53 (siehe Fig. 1 (a)) das Kabel 1 geeignet bewegen. Dementsprechend bewegt sich der Außenumfang des Kabels 1 mitsamt dem dort angeordneten hinteren Teil 21 der umgestülpten Schirmung 11 sukzessive entlang der Bürste 31 und kann von deren Borsten 33 in der Umfangsrichtung 25 gebürstet werden.

Fig. 3 (b) veranschaulicht eine alternative Ausgestaltung, bei der eine Bürste 31 in einer Bürstenumlaufrichtung 63 um den Außenumfang des Kabels 1 herum bewegt wird, um den hinteren Teil 21 der umgestülpten Schirmung 11 in Umfangsrichtung 25 zu bürsten. Das Kabel 1 braucht in diesem Fall während des Bürstvorgangs nicht notwendigerweise bewegt bzw. rotiert werden. Die Bürste 31 kann wiederum als Rundbürste ausgeführt sein und in einer Bürstenrotationsrichtung 61 rotieren.

Sowohl bei der in Fig. 3 (a) als auch bei der in Fig. 3 (b) dargestellten Ausgestaltung können gegebenenfalls mehrere Bürsten 31 vorgesehen sein. Diese Bürsten 31 können entlang des Umfangs des Kabels 1 an verschiedenen Positionen angeordnet sein. Hierdurch kann der Bürstvorgang beschleunigt und/oder effizienter gestaltet werden.

Fig. 3 (c) veranschaulicht eine weitere alternative Ausgestaltung, bei der die Bürste 31 als Ringbürste ausgeführt ist. Borsten 33 der Bürste 31 sind dabei an einem Ring befestigt, der einen größeren Durchmesser aufweist als das Kabel 1. Die Borsten 33 ragen hierbei von den Ring radial nach innen ab. Dementsprechend kann die Ringbürste über das Ende des Kabels 1 geschoben werden. Anschließend kann die Bürste 31 in der Bürstenumlaufrichtung 63 rotiert werden, sodass ihre Borsten 33 den hinteren Teil 21 der umgestülpten Schirmung 11 in Umfangsrichtung bürsten können. Alternativ oder ergänzend kann das Kabel 1 um seine Längsrichtung 27 rotiert werden.

Abschließend wird angemerkt, dass die Schritte des hierin beschriebenen Verfahrens mithilfe einer Vorrichtung 65 durchgeführt werden können, die unter anderem die Halteeinrichtung 45, die Umstülpeinrichtung 47, die Schutzeinrichtung 49 sowie die Bürsteinrichtung 51 umfassen kann. Ergänzend kann die Vorrichtung 65 auch die Antriebseinrichtung 53, die Verschiebeeinrichtung 55 und die Befestigungseinrichtung 57 umfassen. Aus Übersichtlichkeitsgründen ist die Vorrichtung 45 in den Figuren jedoch nicht als Gesamtheit dargestellt. Außerdem sind die verschiedenen Einrichtungen 45, 47, 49, 51, 53, 55, 57 lediglich sehr schematisch dargestellt.

### BEZUGSZEICHENLISTE

- 1: Kabel
- 3: Ende des Kabels
- 5: Kabelinnenteil
- 7: Innenleiter
- 9: Zwischenisolation
- 11: Schirmung
- 13: Drahtgeflecht
- 15: Außenisolation
- 17: umgestülpter Endbereich der Schirmung
- 19: vorderer Teil der umgestülpten Schirmung
- 21: hinterer Teil der umgestülpten Schirmung
- 23: Drähte der Schirmung
- 24: gebürstete Drähte der Schirmung
- 25: Umfangsrichtung
- 27: Längsrichtung
- 29: Mantelfläche
- 31: Bürste
- 33: Borsten
- 35: Schutzhülse
- 37: Stirnseite der Schutzhülse
- 39: trichterartige Aufweitung
- 41: Außenleiterhülse
- 43: Kabelanschlusselement
- 44: Innenleiteranschluss
- 45: Halteeinrichtung
- 47: Umstülpeinrichtung
- 49: Schutzeinrichtung
- 51: Bürsteinrichtung
- 53: Antriebseinrichtung
- 55: Verschiebeeinrichtung
- 57: Befestigungseinrichtung
- 59: Vercrimpung
- 61: Bürstenrotationsrichtung
- 63: Bürstenumlaufrichtung
- 65: Vorrichtung

## Patentansprüche

1. Verfahren zum Bearbeiten eines Endes (3) eines Kabels (1),
wobei das Kabel (1) eine einen Kabelinnenteil (5) umgebende Schirmung (11) aus einem Drahtgeflecht (13) aufweist,
wobei das Verfahren aufweist:
Umstülpen eines Endbereichs (17) der Schirmung (11),
Schützen eines dem Ende (3) des Kabels (1) näheren vorderen Teils (19) des umgestülpten Endbereichs (17) der Schirmung (11) gegen mechanischen Kontakt von radial außen während ein dem Ende (3) des Kabels (1) fernerer hinterer Teil (21) des umgestülpten Endbereichs (17) der Schirmung (11) ungeschützt freiliegend verbleibt, und
Bürsten des hinteren Teils (21) des umgestülpten Endbereichs (17) der Schirmung (11) in einer Umfangsrichtung (25) tangential zu einem Umfang des Kabels (1).

2. Verfahren nach Anspruch 1,
wobei der hintere Teil (21) des umgestülpten Endbereichs (17) der Schirmung (11) derart gebürstet wird, dass Drähte (23) aus dem Drahtgeflecht (13) der Schirmung (11) zumindest bereichsweise entflochten und in Umfangsrichtung (25) des Kabels (1) verlaufend entlang einer Mantelfläche (29) des Kabels angeordnet werden.

3. Verfahren nach einem der vorangehenden Ansprüche,
wobei eine zum Bürsten eingesetzte Bürste (31) und das Kabel (1) relativ zueinander derart bewegt werden, dass die Bürste (31) entlang einer Umfangsrichtung (25) des Kabels (1) um das Ende (3) des Kabels (1) herumgeführt wird.

4. Verfahren nach einem der vorangehenden Ansprüche,
wobei der vordere Teil (19) des umgestülpten Endbereichs (17) der Schirmung (11) mithilfe einer Schutzhülse (35) geschützt wird, welche derart ausgestaltet ist und positioniert wird, dass die Schutzhülse (35) einen Außenumfang des vorderen Teils (19) des umgestülpten Endbereichs (17) der Schirmung (11) überdeckt und den hinteren Teil (21) des umgestülpten Endbereichs (17) der Schirmung (11) nicht überdeckt.

5. Verfahren nach Anspruch 4,
wobei die Schutzhülse (35) an zumindest einer Stirnseite (37) eine trichterartige Aufweitung (39) aufweist.

6. Verfahren nach einem der vorangehenden Ansprüche,
wobei das Verfahren ferner umfasst:
Anbringen einer Außenleiterhülse (41) an dem Ende (3) des Kabels (1) derart, dass die Außenleiterhülse (41) sowohl den vorderen Teil (19) als auch den in Umfangsrichtung (25) gebürsteten hinteren Teil (21) des umgestülpten Endbereichs (17) der Schirmung (11) überdeckt.

7. Verfahren nach Anspruch 6,
wobei die Außenleiterhülse (41) an dem Ende (3) des Kabels (1) insbesondere angrenzend an den vorderen Teil (19) des umgestülpten Endbereichs (17) der Schirmung (11) befestigt wird.

8. Verfahren nach einem der vorangehenden Ansprüche,
wobei der vordere Teil (19) des umgestülpten Endbereichs (17) der Schirmung (11) in Längsrichtung (27) des Kabels (1) länger ist als der hintere Teil (21) des umgestülpten Endbereichs (17) der Schirmung (11).

9. Kabel (1) aufweisend:
einen Kabelinnenteil (5), und
eine den Kabelinnenteil (5) umgebende Schirmung (11) aus einem Drahtgeflecht (13),
wobei ein Endbereich (17) der Schirmung (11) umgestülpt ist,
wobei ein einem Ende (3) des Kabels (1) näherer vorderer Teil (19) des umgestülpten Endbereichs (17) der Schirmung (11) miteinander verflochtene Drähte (23) aufweist, und
wobei ein dem Ende (3) des Kabels (1) fernerer hinterer Teil (21) des umgestülpten Endbereichs (17) der Schirmung (11) entflochtene Drähte (23) aufweist, welche in Umfangsrichtung (25) des Kabels (1) verlaufend entlang einer Mantelfläche (29) des Kabels (1) angeordnet sind.

10. Kabel nach Anspruch 9,
ferner aufweisend eine Außenleiterhülse (41), welche sowohl den vorderen Teil (19) als auch den hinteren Teil (21) des umgestülpten Endbereichs (17) der Schirmung (11) überdeckt und welche zumindest im Bereich des vorderen Teils (19) des umgestülpten Endbereichs (17) der Schirmung (11) an dem Kabel (1) befestigt ist.

11. Vorrichtung (65) zum Bearbeiten eines Endes (3) eines Kabels (1), bei welchem eine Schirmung (11) aus einem Drahtgeflecht (13), einen Kabelinnenteil (5) umgibt, wobei die Vorrichtung (65) aufweist:
eine Halteeinrichtung (45) zum Halten eines Endes (3) eines Kabels (1),
eine Umstülpeinrichtung (47) zum Umstülpen eines Endbereichs (17) der Schirmung (11),
eine Schutzeinrichtung (49) zum temporären Schützen eines dem Ende (3) des Kabels (1) näheren vorderen Teils (19) des umgestülpten Endbereichs (17) der Schirmung (11) gegen Kontakt von radial außen während ein dem Ende (3) des Kabels (1) fernerer hinterer Teil (21) des umgestülpten Endbereichs (17) der Schirmung (11) ungeschützt freiliegend verbleibt, und
eine Bürsteinrichtung (51) zum Bürsten des hinteren Teils (21) des umgestülpten Endbereichs (17) der Schirmung (11) in einer Umfangsrichtung (25) tangential zu einem Umfang des Kabels (1).

12. Vorrichtung nach Anspruch 11,
ferner aufweisend eine Antriebseinrichtung (53), welche dazu konfiguriert ist, das von der Halteeinrichtung (45) gehaltene Kabel (1) und zumindest eine in der Bürsteinrichtung (51) vorgesehene Bürste (31) derart relativ zueinander zu bewegen, dass der hintere Teil (21) des umgestülpten Endbereichs (17) der Schirmung (11) von der Bürste (31) derart gebürstet wird, dass Drähte (23) aus dem Drahtgeflecht (13) der Schirmung (11) zumindest bereichsweise entflochten und in Umfangsrichtung (25) des Kabels (1) verlaufend entlang einer Mantelfläche (29) des Kabels (1) angeordnet werden.

13. Vorrichtung nach einem der Ansprüche 11 und 12,
ferner aufweisend eine Verschiebeeinrichtung (55), welche dazu konfiguriert ist, das von der Halteeinrichtung (45) gehaltene Kabel (1) und eine in der Schutzeinrichtung (49) vorgesehene Schutzhülse (35) derart relativ zueinander zu bewegen, dass die Schutzhülse (35) temporär einen Außenumfang des vorderen Teils (19) des umgestülpten Endbereichs (17) der Schirmung (11) überdeckt und den hinteren Teil (21) des umgestülpten Endbereichs (17) der Schirmung (11) nicht überdeckt.

14. Vorrichtung nach einem der Ansprüche 11 bis 13,
ferner aufweisend eine Befestigungseinrichtung (57) zum Befestigen einer Außenleiterhülse (41) an dem Ende (3) des Kabels (1) derart, dass die Außenleiterhülse (41) sowohl den vorderen Teil (19) als auch den in Umfangsrichtung gebürsteten hinteren Teil (21) des umgestülpten Endbereichs (17) der Schirmung (11) überdeckt.

## Claims

1. Method for processing an end (3) of a cable (1),
wherein the cable (1) has a shielding (11), surrounding a cable inner part (5), made of a wire mesh (13),
wherein the method involves:
everting an end region (17) of the shielding (11),
protecting a front part (19), closer to the end (3) of the cable (1), of the everted end region (17) of the shielding (11) against mechanical contact radially from the outside while a rear part (21), further away from the end (3) of the cable (1), of the everted end region (17) of the shielding (11) remains exposed and unprotected, and
brushing the rear part (21) of the everted end region (17) of the shielding (11) in a circumferential direction (25) tangential to a circumference of the cable (1).

2. Method according to Claim 1,
wherein the rear part (21) of the everted end region (17) of the shielding (11) is brushed such that wires (23) from the wire mesh (13) of the shielding (11) are at least regionally unbraided and arranged, extending in the circumferential direction (25) of the cable (1), along a lateral surface (29) of the cable.

3. Method according to either of the preceding claims,
wherein a brush (31) used for brushing and the cable (1) are moved relative to one another such that the brush (31) is guided in a circumferential direction (25) of the cable (1) about the end (3) of the cable (1).

4. Method according to one of the preceding claims,
wherein the front part (19) of the everted end region (17) of the shielding (11) is protected with the aid of a protective sleeve (35) which is configured and position such that the protective sleeve (35) covers an outer circumference of the front part (19) of the everted end region (17) of the shielding (11) and does not cover the rear part (21) of the everted end region (17) of the shielding (11).

5. Method according to Claim 4,
wherein the protective sleeve (35) has a funnel-like widening (39) on at least one end side (37).

6. Method according to one of the preceding claims,
wherein the method also involves:
attaching an outer conductor sleeve (41) to the end (3) of the cable (1) such that the outer conductor sleeve (41) covers both the front part (19) and the rear part (21), brushed in the circumferential direction (25), of the everted end region (17) of the shielding (11).

7. Method according to Claim 6,
wherein the outer conductor sleeve (41) is fastened to the end (3) of the cable (1) in particular so as to adjoin the front part (19) of the everted end region (17) of the shielding (11).

8. Method according to one of the preceding claims,
wherein the front part (19) of the everted end region (17) of the shielding (11) is longer in the longitudinal direction (27) of the cable (1) than the rear part (21) of the everted end region (17) of the shielding (11).

9. Cable (1) having:
a cable inner part (5) and
a shielding (11), surrounding the cable inner part (5), made of a wire mesh (13),
wherein an end region (17) of the shielding (11) is everted,
wherein a front part (19), closer to an end (3) of the cable (1), of the everted end region (17) of the shielding (11) has mutually braided wires (23), and
wherein a rear part (21), further away from the end (3) of the cable (1), of the everted end region (17) of the shielding (11) has unbraided wires (23) which are arranged, extending in the circumferential direction (25) of the cable (1), along a lateral surface (29) of the cable (1).

10. Cable according to Claim 9,
also having an outer conductor sleeve (41) which covers both the front part (19) and the rear part (21) of the everted end region (17) of the shielding (11) and which is fastened to the cable (1) at least in the region of the front part (19) of the everted end region (17) of the shielding (11).

11. Apparatus (65) for processing an end (3) of a cable (1) in which a shielding (11) made of a wire mesh (13) surrounds a cable inner part (5), wherein the apparatus (65) has:
a holding device (45) for holding an end (3) of a cable (1),
an everting device (47) for everting an end region (17) of the shielding (11), a protective device (49) for temporarily protecting a front part (19), closer to the end (3) of the cable (1), of the everted end region (17) of the shielding (11) against contact radially from the outside while a rear part (21), further away from the end (3) of the cable (1), of the everted end region (17) of the shielding (11) remains exposed and unprotected, and
a brushing device (51) for brushing the rear part (21) of the everted end region (17) of the shielding (11) in a circumferential direction (25) tangential to a circumference of the cable (1).

12. Apparatus according to Claim 11,
also having a drive device (53) which is configured to move the cable (1) held by the holding device (45) and at least one brush (31) provided in the brush device (51) relative to one another such that the rear part (21) of the everted end region (17) of the shielding (11) is brushed by the brush (31) such that wires (23) are at least regionally unbraided from the wire mesh (13) of the shielding (11) and are arranged, extending in the circumferential direction (25) of the cable (1), along a lateral surface (29) of the cable (1).

13. Apparatus according to either of Claims 11 and 12,
also having a displacing device (55) which is configured to move the cable (1) held by the holding device (45) and a protective sleeve (35) provided in the protective device (49) relative to one another such that the protective sleeve (35) temporarily covers an outer circumference of the front part (19) of the everted end region (17) of the shielding (11) and does not cover the rear part (21) of the everted end region (17) of the shielding (11).

14. Apparatus according to one of Claims 11 to 13,
also having a fastening device (57) for fastening an outer conductor sleeve (41) to the end (3) of the cable (1) such that the outer conductor sleeve (41) covers both the front part (19) and the rear part (21), brushed in the circumferential direction, of the everted end region (17) of the shielding (11).

## Revendications

1. Procédé d'usinage d'une extrémité (3) d'un câble (1),
le câble (1) présentant un blindage (11) en un treillis de fils métalliques (13) entourant une partie intérieure de câble (5),
le procédé comprenant :
le retroussement d'une zone d'extrémité (17) du blindage (11),
la protection d'une partie avant (19) de la zone d'extrémité retroussée (17) du blindage (11), plus proche de l'extrémité (3) du câble (1), contre un contact mécanique radialement depuis l'extérieur, tandis qu'une partie arrière (21) de la zone d'extrémité retroussée (17) du blindage (11) plus éloignée de l'extrémité (3) du câble (1) reste exposée sans être protégée, et
le brossage de la partie arrière (21) de la zone d'extrémité retroussée (17) du blindage (11) dans une direction circonférentielle (25) tangentiellement à une circonférence du câble (1).

2. Procédé selon la revendication 1,
dans lequel la partie arrière (21) de la zone d'extrémité retroussée (17) du blindage (11) est brossée de telle sorte que des fils métalliques (23) du treillis de fils métalliques (13) du blindage (11) sont défaits au moins par zones et agencés dans la direction circonférentielle (25) du câble (1) le long d'une surface d'enveloppe (29) du câble.

3. Procédé selon l'une quelconque des revendications précédentes, dans lequel une brosse (31) utilisée pour le brossage et le câble (1) sont déplacés l'un par rapport à l'autre de telle sorte que la brosse (31) est guidée le long d'une direction circonférentielle (25) du câble (1) autour de l'extrémité (3) du câble (1).

4. Procédé selon l'une quelconque des revendications précédentes,
dans lequel la partie avant (19) de la zone d'extrémité retroussée (17) du blindage (11) est protégée à l'aide d'une douille de protection (35) qui est conçue et positionnée de telle sorte que la douille de protection (35) recouvre une circonférence extérieure de la partie avant (19) de la zone d'extrémité retroussée (17) du blindage (11) et ne recouvre pas la partie arrière (21) de la zone d'extrémité retroussée (17) du blindage (11).

5. Procédé selon la revendication 4,
dans lequel la douille de protection (35) présente un élargissement (39) en forme d'entonnoir sur au moins un côté frontal (37).

6. Procédé selon l'une quelconque des revendications précédentes,
le procédé comprenant en outre :
la disposition d'une douille de conducteur extérieur (41) à l'extrémité (3) du câble (1) de telle sorte que la douille de conducteur extérieur (41) recouvre à la fois la partie avant (19) et la partie arrière (21), brossée dans la direction circonférentielle (25), de la zone d'extrémité retroussée (17) du blindage (11).

7. Procédé selon la revendication 6,
dans lequel la douille de conducteur extérieur (41) est fixée à l'extrémité (3) du câble (1), notamment de manière adjacente à la partie avant (19) de la zone d'extrémité retroussée (17) du blindage (11).

8. Procédé selon l'une quelconque des revendications précédentes, dans lequel la partie avant (19) de la zone d'extrémité retroussée (17) du blindage (11) est plus longue dans la direction longitudinale (27) du câble (1) que la partie arrière (21) de la zone d'extrémité retroussée (17) du blindage (11).

9. Câble (1) présentant :
une partie intérieure de câble (5), et
un blindage (11) en un treillis de fils métalliques (13) entourant la partie intérieure de câble (5),
une zone d'extrémité (17) du blindage (11) étant retroussée,
une partie avant (19) de la zone d'extrémité retroussée (17) du blindage (11), plus proche d'une extrémité (3) du câble (1), présentant des fils métalliques (23) entrelacés entre eux, et
une partie arrière (21) de la zone d'extrémité retroussée (17) du blindage (11), plus éloignée de l'extrémité (3) du câble (1), présentant des fils métalliques (23) défaits, qui sont agencés dans la direction circonférentielle (25) du câble (1) le long d'une surface d'enveloppe (29) du câble (1).

10. Câble selon la revendication 9,
présentant en outre une douille de conducteur extérieur (41) qui recouvre à la fois la partie avant (19) et la partie arrière (21) de la zone d'extrémité retroussée (17) du blindage (11) et qui est fixée au câble (1) au moins dans la zone de la partie avant (19) de la zone d'extrémité retroussée (17) du blindage (11).

11. Dispositif (65) d'usinage d'une extrémité (3) d'un câble (1), dans lequel un blindage (11) en un treillis de fils métalliques (13) entoure une partie intérieure de câble (5), le dispositif (65) présentant :
un appareil de maintien (45) pour maintenir une extrémité (3) d'un câble (1), un appareil de retroussement (47) pour retrousser une zone d'extrémité (17) du blindage (11),
un appareil de protection (49) pour protéger temporairement une partie avant (19) de la zone d'extrémité retroussée (17) du blindage (11), plus proche de l'extrémité (3) du câble (1), contre un contact radialement depuis l'extérieur, tandis qu'une partie arrière (21) de la zone d'extrémité retroussée (17) du blindage (11), plus éloignée de l'extrémité (3) du câble (1), reste exposée sans être protégée, et
un appareil de brossage (51) pour brosser la partie arrière (21) de la zone d'extrémité retroussée (17) du blindage (11) dans une direction circonférentielle (25) tangentiellement à une circonférence du câble (1).

12. Dispositif selon la revendication 11,
présentant en outre un appareil d'entraînement (53), qui est configuré pour déplacer le câble (1) maintenu par l'appareil de maintien (45) et au moins une brosse (31) prévue dans l'appareil de brossage (51) l'un par rapport à l'autre de telle sorte que la partie arrière (21) de la zone d'extrémité retroussée (17) du blindage (11) est brossée par la brosse (31) de telle sorte que des fils métalliques (23) du treillis de fils métalliques (13) du blindage (11) sont défaits au moins par zones et agencés dans la direction circonférentielle (25) du câble (1) le long d'une surface d'enveloppe (29) du câble (1).

13. Dispositif selon l'une quelconque des revendications 11 et 12, présentant en outre un appareil de coulissement (55), qui est configuré pour déplacer le câble (1) maintenu par l'appareil de maintien (45) et une douille de protection (35) prévue dans l'appareil de protection (49) l'un par rapport à l'autre de telle sorte que la douille de protection (35) recouvre temporairement une circonférence extérieure de la partie avant (19) de la zone d'extrémité retroussée (17) du blindage (11) et ne recouvre pas la partie arrière (21) de la zone d'extrémité retroussée (17) du blindage (11).

14. Dispositif selon l'une quelconque des revendications 11 à 13, présentant en outre un appareil de fixation (57) pour fixer une douille de conducteur extérieur (41) à l'extrémité (3) du câble (1) de telle sorte que la douille de conducteur extérieur (41) recouvre à la fois la partie avant (19) et la partie arrière (21), brossée dans la direction circonférentielle, de la zone d'extrémité retroussée (17) du blindage (11).
